# EUROPÄISCHE PATENTSCHRIFT

(11) **EP 3 980 657 B1**
(45) Veröffentlichungstag und Bekanntmachung des Hinweises auf die Patenterteilung: **26.07.2023**
(21) Anmeldenummer: 20730998.0
(22) Anmeldetag: 27.05.2020
(51) Int. Cl.: F16D 51/22, F16D 65/22, F16D 65/56

(54) **SPREIZEINHEIT FÜR EINE KRAFTFAHRZEUGTROMMELBREMSE**
SPREADER UNIT FOR A DRUM BRAKE,
UNITÉ D'ÉCARTEMENT POUR FREIN À TAMBOUR

(30) Priorität: 05.06.2019 DE 102019208223
(43) Veröffentlichungstag der Anmeldung: 13.04.2022
(73) Patentinhaber: Continental Automotive Technologies GmbH, 30165 Hannover (DE)
(72) Erfinder: GÄDKE, Martin, 60488 Frankfurt am Main (DE); VON HAYN, Holger, 60488 Frankfurt am Main (DE); SCHULITZ, Matthias, 60488 Frankfurt am Main (DE); SEFO, Ahmed, 60488 Frankfurt am Main (DE); BACH, Uwe, 60488 Frankfurt am Main (DE); MESSNER, Adrian, 60488 Frankfurt am Main (DE); RITTER, Wolfgang, 60488 Frankfurt am Main (DE); HOFFMANN, Jens, 60488 Frankfurt am Main (DE); VEY, Christian, 60488 Frankfurt am Main (DE)
(74) Vertreter: Continental Corporation
(86) Internationale Anmeldenummer: PCT/EP2020/064683
(87) Internationale Veröffentlichungsnummer: WO 2020/244991

(56) Entgegenhaltungen:
- EP-A1- 0 575 825
- DE-A1- 19 858 745
- DE-A1-102017 218 219

## Beschreibung

Die Erfindung bezieht sich auf eine, insbesondere elektromechanisch antreibbare, Spreizeinheit für eine Trommelbremse eines Kraftfahrzeugs, umfassend ein Gehäuse und zwei in Bezug auf das Gehäuse verdrehgesichert angeordnete erste und zweite Bremsschuhaufnahmen, welche linear entlang einer Achse voneinander weg jeweils in eine Spreizrichtung sowie zueinander jeweils in eine Löserichtung betätigbar sind und auf jeweils einen ersten und einen zweiten, mit jeweils einem Bremsbelag versehenen Bremsschuh einwirken, wobei die Linearbewegung der Bremsschuhaufnahmen durch eine oder mehrere Rot-Trans-Wandler-Vorrichtungen erzeugt wird, und wobei eine Nachstelleinrichtung zum Ausgleich eines durch einen Verschleiß der Bremsbeläge sich erhöhenden Betätigungsweg zwischen den Betätigungskolben angeordnet ist, die so eingerichtet ist, dass sie den Abstand der Betätigungskolben in wenigstens einen Nachstellschritt ändert, wenn der Betätigungsweg einen Sollwert überschritten hat.

Eine Spreizeinheit ist in der Offenlegungsschrift DE 10 2017 218 219 A1 beschrieben. Die Nachstelleinrichtung hat die Aufgabe, den Verschleiß der Bremsbeläge auszugleichen, so dass der Abstand zwischen dem Belag und der Bremstrommel, das Lüftspiel, unabhängig von dem Verschleißzustand des Belages im Wesentlichen gleich bleibt, so dass die Spreizeinheit zur Betätigung der Bremse stets den gleichen Betätigungsweg auszuführen hat.

Bei einer lang andauernden Bremsung, z. B. auf einer Gefällstrecke, kommt es zu einer starken Erwärmung der Bremse, wobei sich die Bremstrommel weitet, so dass zwecks automatischem Wegausgleich bzw. zwecks Aufrechterhaltung der Bremswirkung die Spreizeinheit einen höheren Betätigungsweg ausführen muss, als im kalten (geschrupften) Trommelzustand. Dieser Ausgleichwird zu einer Nachstellung führen, obwohl kein entsprechender Verschleiß vorliegt. Nach Abkühlung der Bremse ist das Lüftspiel daher entsprechend verkleinert bzw. ist es nicht ausgeschlossen, dass der Belag an der Bremstrommel haften bleibt, bzw. dass sich die Trommelbremse unerwünscht verkeilt, d.h. unlösbar wird. Um dies zu vermeiden, wird das originäre Lüftspiel entsprechend vergrößert gewählt, was aber höhere Betätigungswege bedeutet. Um trotz allem eine schnell wirkende Bremse zu erhalten, muss der Motor, der die Spreizeinheit antreibt, schnell genug ansprechen und die Spreizeinheit darf keine zu große innere Reibung aufweisen. Dies erhöht den Bauaufwand und den Energiebedarf für eine Bremsung.

Die Erfindung beruht daher auf der Aufgabe, eine Spreizeinheit zu schaffen, die trotz eines verhältnismäßig klein dimensionierten, originären Lüftspiels gewährleistet, dass es nicht zu einer Anhaftung/Verkeilung zwischen Reibbeläge und Bremstrommel kommt, wenn die Bremstrommel zu Beginn der Bremsung temperaturbedingt ausgedehnt/ausgeweitet war. Die Erfindung ist definiert in dem unabhängigen Anspruch 1.

Zur Lösung der Aufgabe sieht die Erfindung vor, dass eine thermisch aktivierbare Sperreinrichtung vorgesehen ist, die so eingerichtet ist, dass bei einer Temperatur oberhalb von einem Sollwert die Ausführung eines Nachstellschrittes durch die Nachstelleinrichtung mechanisch verhindert ist.

Auf diese Weise wird automatisch stromlos erreicht, dass bei einer erfassten Bremsentemperatur, die oberhalb von einem vorgegeben, definierten Temperatursollwert liegt, zwecks Kompensation gar kein Nachstellschritt oder ein reduzierter Nachstellschritt ausgeführt wird, so dass eine übermäßige Nachstellung verhindert ist. Denn anderenfalls würde der nachgestellte Betätigungsweg der Spreizeinheit wegen der temperurbedingten Weitung der Bremse dasjenige Maß annehmen, das bei einer kalten Bremse mit einem hohen Verschleiß der Bremsbeläge verknüpft ist. Da der Nachstellschritt verhindert oder angepasst ist, stellt sich nach einer Bremsung, die mit einer erhöhten Temperatur der Bremse einhergeht, und nach der Abkühlung der Bremse das originäre ausgelegte (unbeeinflusste) Lüftspiel wieder ein. Eine verschleißbedingte Nachstellung erfolgt also nur dann, wenn die Temperatur der Bremse bei Bremsbetätigung/Bremsung nicht über den Temperatursollwert erhöht ist.

Vorzugsweise weist die Nachstelleinrichtung eine aus zwei Klauen bestehende schrittweise arbeitende Freilaufkupplung auf, wobei die Klauen im Freilauf einen relativen Hub ausführen und wobei die eine Klaue drehgesichert mit der ersten Bremsschuhaufnahme und die andere Klaue über eine Gewindespindel mit dem zweiten Betätigungskolben verbunden ist.

Bei einer Betätigung der Bremse dreht sich die erste Bremsschuhaufnahme gegenüber dem zweiten Betätigungskolben in Freilaufrichtung der Klauenkupplung. Solange der Drehwinkel unterhalb einer vorgegebenen Schrittweite bleibt, dreht sich die Freilaufkupplung beim Lösen der Bremse wieder in ihre Ursprungsposition zurück. Wird die Schrittweite bei einer Bremsung aber überschritten, verbleibt die Freilaufkupplung beim Lösen der Bremse in der erreichten Winkelposition, wodurch der zweite Betätigungskolben mittels der Gewindespindel axial gegenüber dem ersten Betätigungskolben dauerhaft versetzt wird, wobei der Versatz den bis dahin erreichten Verschleiß des Bremsbelages ausgleicht.

Bei Freilauf entfernen sich die Klauen voneinander, führen also einen relativen Hub aus. Dies kann genutzt werden, um auch beim Überschreiten der Schrittweite es der Freilaufkupplung zu ermöglichen, in ihre Ausgangsposition zu gelangen. Dazu ist die Sperreinrichtung wirkmäßig parallel zur Klauenkupplung angeordnet und hält im aktivierten Zustand die Klauen getrennt.

Vorzugsweise besitzen die Klauen auf jeweils einer ihrer Stirnseiten auf einem Kreis verlaufende und ineinandergreifende Sägezahnrampen, wobei die Länge einer Rampe auf dem Kreisbogen die vorgegebene Schrittweite und die Höhe der Rampe einen maximalen Klauenhub definiert. Jede Rampe bildet eine Raste, so dass die Klauenkupplung in die nächste Raste springt, wenn die Schrittweite erreicht ist.

Die Sägezahnrampen bewirken, dass die gegenseitige Verdrehung der Klauen in eine Umfangsrichtung gesperrt und in der entgegengesetzten Umfangsrichtung eine axial gerichtete Kraft ausgeübt wird. Wenn im letzteren Fall die beiden Klauen gegeneinander gedreht werden, gleiten die die Rampen aufeinander, so dass die Klauen voneinander wegbewegt werden. Sobald der Betätigungsweg der Spreizeinheit verschleißbedingt zu groß wird, wird die Drehung der Klauen größer als die Schrittweite, so dass die Klauen in die nächste Raste springen. Beim Lösen der Bremse wird die mit der ersten Bremsschuhaufnahme verbundene Klaue die andere Klaue mitnehmen, so dass deren Drehung durch die Spindelverbindung in eine translatorische Bewegung des zweiten Betätigungskolbens umgesetzt wird. Dadurch erhalten die beiden Betätigungskolben einen größeren Abstand voneinander, so dass das ursprüngliche Lüftspiel wiederhergestellt wird.

Bei einer starken Erwärmung der Bremse während des Bremsvorganges wird sich der Betätigungsweg ebenfalls vergrößern, was aber nicht zu einer Nachstellung führen soll. Daher verhindert die Sperreinrichtung ein Eingreifen der Klaue in die nächste Raste, wodurch diese beim Lösen der Bremse in die ursprüngliche Raste zurückfällt. Es erfolgt somit keine Nachstellung. Diese ist auch nicht gewollt, da der erhöhte Betätigungsweg nicht durch einen Abrieb der Beläge, sondern durch eine temperaturbedingte Weitung der Bremstrommel bewirkt wurde.

Vorzugsweise wird die Sperreinrichtung durch ein Bimetallelement dargestellt, wobei zwischen den Klauen ein Sperrraum liegt, der seitlich von den Klauen begrenzt ist, und wobei das Bimetallelement so angeordnet ist, dass es sich jedenfalls dann in den oder im Sperrraum auszudehnen vermag, wenn der maximale Klauenhub erreicht worden ist.

Spätestens wenn sich die Klauen wegen eines erhöhten Betätigungsweges soweit gedreht und sich dabei voneinander entfernt haben, dass die Klauen in die nächste Raste springen würden, schiebt sich das Bimetallelement in den Sperrraum oder dehnt sich im Sperrraum aus und verhindert dies, weil die Klauen sich beidseitig an das Bimetallelement anlegen, statt in eine Raste zurückzufallen.

Eine Ausführung des Bimetallelementes kann aus einer Spiralfeder bestehen, deren Durchmesser sich temperaturbedingt ändert und die so angeordnet ist, dass ihr äußerer Rand bei einer temperaturbedingten Ausdehnung in den Sperrraum gelangt. Diese Spiralfeder wird koaxial zur Achse der Spreizeinheit zwischen den beiden Klauen angeordnet. Bei einer Erwärmung der Bremse dehnt sich die Spiralfeder aus, so dass ihr äußerer Rand in den besagten Sperrraum gelangt.

Eine andere Möglichkeit besteht darin, dass das Bimetallelement wenigstens einen von einem Zentrum ausgehenden Arm aufweist, der sich temperaturbedingt verlängert und der so angeordnet ist, dass sein distales Ende bei einer temperaturbedingten Verlängerung des Armes in den Sperrraum gelangt.

Um auf den Umfang eine gleichmäßige Beabstandung der Klauen zu gewährleisten, können naturgemäß auch mehrere Arme sternförmig angeordnet sein.

Eine weitere Ausführung des Bimetallelements umfasst zwei gegensinnig angeordneten Tellerfedern, deren jeweils eine Seitenfläche temperaturbedingt eine konvexe oder konkave Form annimmt und deren äußere Ränder sich in dem Sperrraum befinden.

Im kalten Zustand sind die Tellerfedern so angeordnet, dass ihre zugewandten Flächen konkav ausgeführt sind, so dass ihre äußeren Ränder nah beieinander liegen und die Breite des Sperrraums bei einer unbetätigten Bremse nicht ausfüllen. Wird eine bestimmte Solltemperatur erreicht, klappen die Tellerfedern um, so dass die einander zugewandten Flächen konvex sind. Die äußeren Ränder sind dann in der Lage, sich an die beiden Klauen zu legen und diese wenigstens auf einem Abstand zu halten, der größer ist als der Klauenhub.

Falle es notwendig ist, können mehrere Tellerfederpaare hintereinander angeordnet werden, die darüber hinaus mit Abstandsringen auf Abstand gehalten werden.

Die Rot-Trans-Wandlerbaugruppe kann verschiedenartig kombiniert ausgebildet vorliegen. Zwecks elektromechanischer Betätigung kooperiert die erfindungsgemäße Spreizvorrichtung mit einem elektromotorischen Aktuator, der insbesondere rationell als selbständig handhabbare bzw. anmontierbare Motor-Getriebebaueinheit ausgebildet sein darf. Eine erfindungsgemäß ausgebildete Spreizeinheit kann in einem elektrischen Trommelbremssystem zwecks Kooperation bzw. Interaktion d.h. Regelung oder Steuerung der Aktuatorik über eine elektronische Steuereinheit mit einer elektrischen Lastmesseinrichtung verfügen, und wobei die Lastmesseinrichtung ganz grundsätzlich an einem beliebigen Ort integriert vorliegen darf. Demzufolge ist es erfindunggemäß ermöglicht, ein radindividuell steuer- bzw. regelbares elektromechanisches Kraftfahrzeugtrommelbremssystem, umfassend mindesten zwei Trommelbremsen auf einer gemeinsamen Fahrzeugachse, vorzusehen, die als Betriebsbremsanlagenkomponente ausgebildet sind, und dementsprechend regelbar sowie insbesondere fremdansteuerbar vorliegen können. Eine flankierend zum Getriebe mittelbar oder unmittelbar angebaute oder integrierte, d.h. im weitesten Sinne die antriebsstrangnahe Platzierung der erfindungsgemäß ausgerüsteten Trommelbremse/Spreizeinrichtung ist möglich.

Die Klauenkupplung wird vorzugsweise so ausgeführt, dass die mit der ersten Bremsschuhaufnahme verbundene Klaue als Rasthülse ausgebildet ist, die fest mit der ersten Bremsschuhaufnahme verbunden ist, und dass die mit dem zweiten Betätigungskolben gekoppelte Klaue als Nachstellkolben ausgebildet ist, wobei die Rasthülse gegenüber der zweiten Bremsschuhaufnahme verdrehgesichert, gegenüber dem zweiten Betätigungskolben axial begrenzt verschiebbar sowie gegen den Nachstellkolben elastisch vorgespannt angeordnet ist.

Im Folgenden soll anhand von vier Ausführungsbeispielen die Erfindung näher erläutert werden. Dazu zeigen:
- Fig. 1: eine stark vereinfachte Schnitteinsicht einer Trommelbremse in Simplex-Bauweise mit einer erfindungsgemäßen Spreizeinheit,
- Fig. 2: eine Ausführungsform der Spreizeinheit im Axialschnitt noch ohne Sperreinrichtung,
- Fig. 3a, b, c: eine vergrößerte Darstellung der Spreizeinheit mit einer ersten Ausführung der erfindungsgemäßen Sperreinrichtung mit einer Bimetall-Spiralfeder in verschiedenen Stadien einer Bremsbetätigung,
- Fig. 4a, b: ein sternförmiges Bimetallelement als zweite Ausführungsform der erfindungsgemäßen Sperreinrichtung,
- Fig. 5a, b: ein aus zwei Tellerfedern bestehendes Bimetallelement als dritte Ausführungsform der erfindungsgemäßen Sperreinrichtung und
- Fig. 6: ein aus zwei Tellerfederpaaren bestehendes Bimetallelement als vierte Ausführungsform der erfindungsgemäßen Sperreinrichtung.

Weil die grundsätzliche Funktionsweise sowohl einer Trommelbremse als auch einer Rot-Trans-Wandler-Vorrichtung (beispielsweise Kugel-Rampen-Vorrichtung) hinreichend bekannt ist, wird nachfolgend lediglich auf die erfindungswesentlichen Funktionseigenschaften eingegangen.

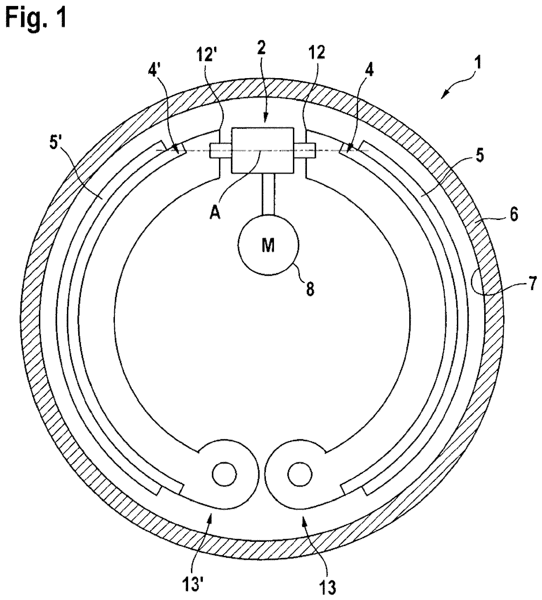

Fig. 1 zeigt beispielhaft und stark vereinfacht eine gattungsgemäße Trommelbremse 1 in Simplex-Bauweise. Andere bekannte Bauweisen von Trommelbremsen sind jedoch innerhalb der Erfindung ebenso adaptierbar. Zwei, jeweils an ihrem ersten Ende 13, 13' drehbar angelehnte, im Wesentlichen kreisbogenförmige Bremsschuhe 4, 4' werden jeweils an ihrem zweiten Ende 12, 12' durch eine Spreizeinheit 2 auseinandergespreizt und dabei gegen die radiale Innenwand 7 einer topfförmigen Bremstrommel 6 gepresst. Die Bremstrommel 6 ist mit einem nicht gezeigten Fahrzeugrad verbunden und verdreht sich zusammen mit diesem gegenüber den Bremsschuhen 4, 4'. Die an den Bremsschuhen 4, 4' angebrachten Bremsbeläge 5, 5' reiben dabei an der Innenwand 7. Durch den Verschleiß der Bremsbeläge 5, 5' vergrößert sich der für eine Bremsung erforderliche Spreizweg kontinuierlich bis hin zu einer definierten Verschleißgrenze. Um eine eventuell unsymmetrische, ungleichmäßige Anlage der Beläge 5, 5' an der Bremstrommel 6 auszugleichen, ist die Spreizeinheit 2 in der Trommelbremse vorzugsweise entlang deren zentralen Achse A schwimmend gelagert angeordnet.

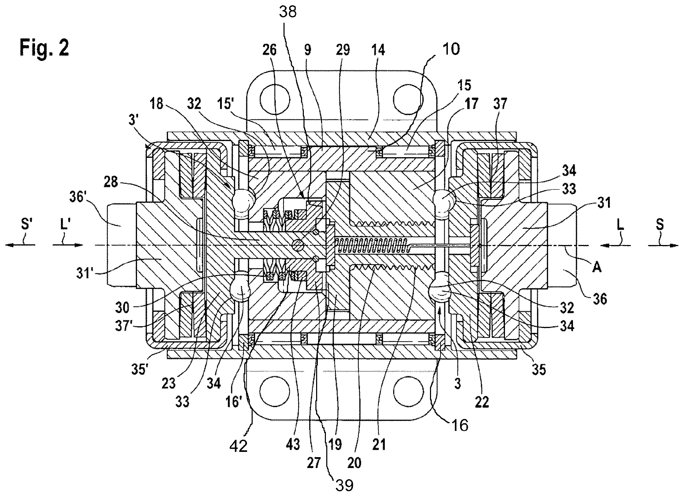

Fig. 2 zeigt eine erfindungsgemäße Ausführungsform der Spreizeinheit 2 in einem unbetätigten Ausgangszustand im Axialschnitt. Die Spreizeinheit 2 weist zwei Kugel-Rampen-Vorrichtungen 3, 3' auf, welche über Bremsschuhaufnahmen 31, 31' auf die Bremsschuhe 4, 4' einwirken. Jede Bremsschuhaufnahme 31, 31' verfügt hierfür über einen Querschlitz 36, 36', in dem jeweils ein flaches Ende 12, 12' eines Bremsschuhs 4, 4' angeordnet wird. Die Spreizeinheit 2 weist ferner ein im Wesentlichen rohrförmiges, mit einem Montageflansch ausgestattetes Gehäuse 14 auf. Der Antrieb der Spreizeinheit 2 erfolgt durch eine in der Fig. 1 angedeutete elektromotorische Antriebseinheit 8 auf die Außenverzahnung 10 einer Antriebshülse 9, welche hierdurch um die Achse A verdreht wird und sich im Gehäuse 14 über Rolllager 15, 15' abstützt und durch Sicherungselemente 16, 16' axial fixiert ist. Weil die erfindungsgemäße Trommelbremse 1 als Betriebsbremse vorgesehen ist, werden sämtliche Bremsvorgänge und nicht etwa lediglich eine statische konstante Krafteinwirkung beim Parken über die Antriebshülse 9 initiiert.

In der gezeigten Ausführungsform sind die Rolllager 15, 15' als Nagellager ausgelegt, andere Rolllagertypen sind innerhalb der Erfindung ebenso zulässig. Der Bremsvorgang erfolgt über die Kugel-Rampen-Vorrichtungen 3, 3' auf die Bremsschuhaufnahmen 31, 31' und den mit diesen im Eingriff stehenden Bremsschuhen 4, 4'.

Jede Kugel-Rampen-Vorrichtung 3, 3' umfasst im Wesentlichen jeweils einen Spreizkolben 22, 23, jeweils einen, gegenüber dem Spreizkolben 22, 23 um die Achse A drehbaren Betätigungskolben 17, 18 und eine Vielzahl von Kugeln 34. An ihren jeweils zueinander gerichteten Stirnseiten weisen der erste Betätigungskolben 17 und der erste Spreizkolben 22 beziehungsweise der zweite Betätigungskolben 18 und der zweite Spreizkolben 23 jeweils am gleichen Umfangskreis eine gleiche Anzahl von Vertiefungen 32, 33 auf, die in Umfangsrichtung regelmäßig verteilt angeordnet sind. Die Vertiefungen 32 in den Betätigungskolben 17, 18 sind jeweils in eine erste Umfangsrichtung - allmählich abflachend - ausgebildet, die Vertiefungen 33 in den Spreizkolben 22, 23 korrespondieren mit den Vertiefungen 32, sind jedoch in eine zweite, gegengerichtete Umfangsrichtung abgeflacht. Zwischen jeder Vertiefung 32 und 33 ist jeweils eine Kugel 34 angeordnet. Durch die Verdrehung des Betätigungskolbens 17, 18 gegenüber dem Spreizkolben 22, 23 in eine Betätigungsrichtung rollen die Kugeln 34 in die abflachenden Bereiche der Vertiefungen 32, 33 und schieben die Kolbenpaarungen auseinander (und vice versa).

Die beiden Spreizkolben 22, 23 sind in Bezug auf das Gehäuse 14 verdrehgesichert und somit nur linear entlang der Achse A versetzbar. In der gezeigten Ausführungsform wird die Verdrehsicherung durch die Abstützung der jeweiligen Bremsschuhaufnahme 31, 31' über den Querschlitz 36, 36' am Bremsschuh 4, 4' sichergestellt. Jede Bremsschuhaufnahme 31, 31' ist dabei über eine randseitig nach innen abgekantete Außenhülse 35, 35' mit dem jeweiligen zugeordneten Spreizkolben 22, 23 verdrehgesichert verbunden. Dabei ist jeder Spreizkolben 22, 23 gegenüber der zugeordneten Bremsschuhaufnahme 31, 31' innerhalb der Außenhülse 35, 35' axial beabstandet mit jeweils einem dazwischen vorgespannten Federelement 37, 37' angeordnet. Dadurch wird eine begrenzte lineare Bewegung in Axialrichtung ermöglicht und hierdurch sichergestellt, dass beim Trommelschrumpfen die Spannkrafterhöhung durch die Kompression des Federelementes 37 begrenzt wird, um eine Beschädigung der Bremse auszuschließen.

Die Übertragung von der für die Kugel-Rampen-Vorrichtungen 3, 3' notwendigen Drehbewegung wird über einen ersten Betätigungskolben 17 und einen zweiten Betätigungskolben 18 ausgeführt. Die beiden Betätigungskolben 17, 18 sind in der Antriebshülse 9, zwecks gleichmäßigen Anlegens der Bremsbeläge 5, 5' an die Innenwand 7, axial schwimmend sowie mittels Axialführung verdrehgesichert angeordnet.

Eine Nachstelleinrichtung 26 umfasst im Wesentlichen einen Nachstellkolben 19, der im Kraftfluss mit dem ersten Betätigungskolben 17 steht, und eine mit dem Nachstellkolben 19 im Eingriff stehende Rasthülse 27, die gegenüber dem zweiten Spreizkolben 28 verdrehgesichert, jedoch axial begrenzt verschiebbar sowie gegen den Nachstellkolben elastisch vorgespannt angeordnet ist.

Ein gesonderter Nachstellkolben 19 ist in den ersten Betätigungskolben 17 mit einem Gewindeabschnitt 21 bis auf Anschlag in eine Gewindebohrung 20 hineingedreht und liegt somit im Kraftfluss zwischen dem ersten Betätigungskolben 17 und dem zweiten Betätigungskolben 18. Der Nachstellkolben 19 weist an seiner dem zweiten Betätigungskolben 18 zugewandten Stirnseite eine axial vorgestreckte ringförmige erste Sägezahnrampe 38 mit mehreren, in eine Umfangsrichtung geneigten zahnförmigen Rampen beziehungsweise Rasten auf.

Die Rasthülse 27 ist im Wesentlichen in dem zweiten Betätigungskolben 18 integriert angeordnet. Sie weist einen zu der ersten Sägezahnrampe 38 korrespondierende, axial vorgestreckte ringförmige zweite Sägezahnrampe 39 auf, welche ebenso mehrere, in eine entgegengesetzte Umfangsrichtung geneigte zahnförmige Rampen beziehungsweise Rasten ausbildet.

Die Rasthülse 27 ist über eine Zentralbohrung auf einem Schaft 28 des zweiten Spreizkolbens 23 axial verschiebbar sowie in Bezug auf das Gehäuse 14 verdrehgesichert gelagert. Zur Verdrehsicherung ist bei der gezeigten Ausführungsform in dem Schaft 28 ein Querstift 29 vorgesehen, an dem sich die Rasthülse 27 über einen axial vorgestreckten geschlitzten Kragen 42 in beide Umfangsrichtungen abstützt.

Die Rasthülse 27 wird durch eine an dem zweiten Betätigungskolben 18 abgestützte Druckfeder 30 permanent mit leichter Kraft auf die Sägezahnrampe 38 des Nachstellkolbens 19 gedrückt. Eine Gleitscheibe 43 verringert die Reibung und die Verdrehung der Druckfeder 30 bei Drehung des zweiten Betätigungskolbens 18.

Die Druckfeder 30 ist in der gezeigten Ausführungsform als eine Wellenfeder ausgebildet. Weitere Ausführungsformen, wie beispielsweise eine Spiralfeder oder ein Tellerfederpaket, sind innerhalb der Erfindung ebenso zulässig.

Beim Antreiben der beiden Betätigungskolben 17 und 18 durch die Antriebshülse 9 erfolgt eine Verdrehung des Nachstellkolbens 19 relativ zur der in Umfangsrichtung unbeweglichen Rasthülse 27. Hierbei laufen die Rampen des Nachstellkolbens 19 bei jeder Betätigung beziehungsweise Bremsung auf die Rampen der Rasthülse 27 auf und drücken diese entgegen der Federwirkung der Druckfeder 30 geringfügig in den zweiten Betätigungskolben 18 hinein. Bei zunehmendem Verschleiß der Bremsbeläge 5, 5' vergrößert sich der erforderliche Hub und somit das Winkelmaß der Verdrehung der Antriebshülse 9 und des daran gekoppelten Nachstellkolbens 19. Sobald das Winkelmaß der Umfangslänge einer Rampe der Sägezahnrampen 38, 39 übersteigt, springt die Axialverzahnung zwischen der Rasthülse 27 und dem Nachstellkolben 19 in die nächste Raste. Wird danach die Bremse nach einer Bremsung gelöst, dreht sich der erste Betätigungskolben 17 zusammen mit der Antriebshülse 9 in die unbetätigte Ausgangsstellung zurück. Der Nachstellkolben 19 wird jedoch durch die verdrehgesicherte Rasthülse 27 am Rückdrehen gehindert und dadurch aus dem ersten Betätigungskolben 17 um das entsprechende Maß herausdreht. Somit erfolgt beim Lösen der Trommelbremse 1 eine schrittweise vollautomatisch weggesteuerte Nachstellung der Bremse.

Im Folgenden werden Ausführungen der Sperreinrichtung beschrieben, die mit der Spreizeinheit gemäß Fig. 2 zum Einsatz kommt.

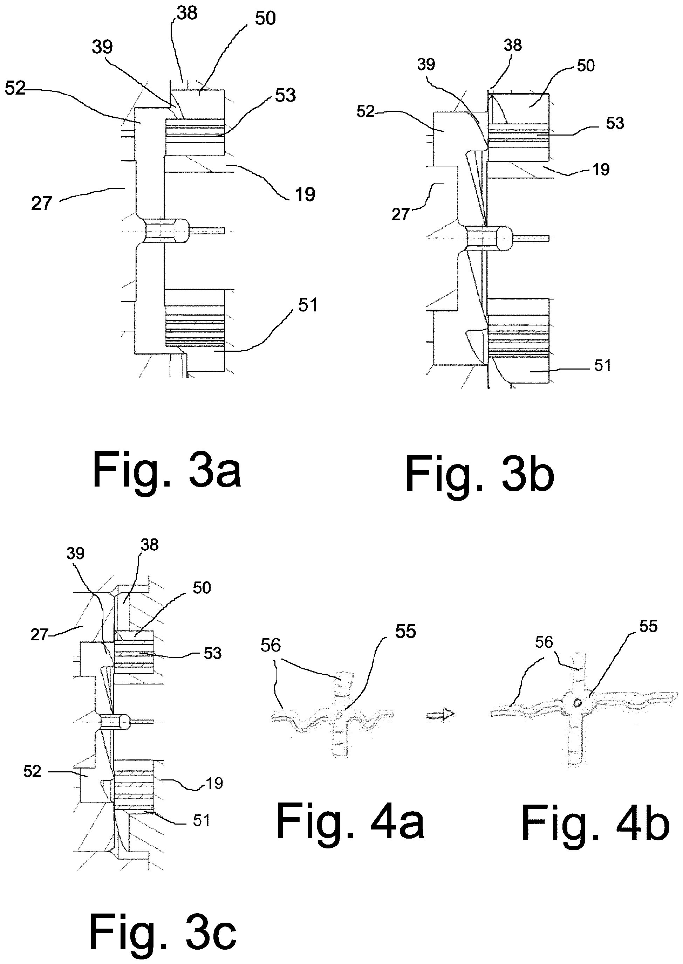

Die Fig. 3a, b zeigen dazu einen Ausschnitt aus dem Bereich der Klauenkupplung, bestehend aus der Rasthülse 27 und dem Nachstellkolben 19. Zwischen diesen befindet sich ein Sperrraum 50. Dazu befindet sich eine Ringvertiefung 51 in der Stirnseite des Nachstellkolbens 19 und eine dazu koaxiale Kreisvertiefung 52 in der Rasthülse 27. Dabei ist der Außendurchmesser der Ringvertiefung 51 größer als der der Kreisvertiefung 52. Radial außen zu den Vertiefungen schließen sich die Sägezahnrampen 38, 39 an. Die Böden der Vertiefungen 51, 52 sind parallel zueinander und liegen sich gegenüber. Der Sperrraum 50 wird einerseits begrenzt durch den Boden der Ringvertiefung 51 und andererseits durch die gegenüberliegende Sägezahnrampe 39 an der Rasthülse 27.

Eine Spiralfeder 53 aus einem Bimetall befindet sich innerhalb der Ringvertiefung 51. Die Tiefe der Ringvertiefung entspricht der Breite der Spiralfeder 53. Die eine Seite der Spiralfeder 53 liegt auf dem Boden der Ringvertiefung 51, so dass ihre andere Seite bis zu den Spitzen der Sägezahnrampe 39 an der Rasthülse 27 reicht. Dabei kann die Spiralfeder 53 an einem zentralen Zapfen in der Ringvertiefung 51 befestigt sein.

Die Fig.3a zeigt eine unbetätigte Bremse im kalten Zustand. Die beiden Sägezahnrampen 38, 39 greifen ineinander, so dass die Spiralfeder 53 in die Kreisvertiefung 52 ragt. Dies ist möglich, da ihr Durchmesser im kalten Zustand kleiner ist als der Durchmesser der Kreisvertiefung 52. Solange die Bremse bei einer Bremsung sich nicht übermäßig erwärmt, bleibt der Durchmesser der Spiralfeder 53 kleiner als der Durchmesser der Kreisvertiefung 52, so dass sie - wie die Fig. 3b zeigt, die Ringvertiefung 51 nicht bis zu deren Außendurchmesser ausfüllt, obwohl die beiden Sägezahnrampen 38, 39 außer Eingriff stehen und bei einer weiteren Drehung in die nächste Raststufe zurückfallen, damit in Folge eine verschleißbedingte Korrektur des Lüftspiels erfolgen kann, wie dies im Zusammenhang mit Fig.2 beschrieben wird.

Anders ist die in Situation, wenn sich die Bremse stark erwärmt. Dies ist in der Fig. 3c dargestellt. Wenn die beiden Sägezahnrampen 38, 39 außer Eingriff stehen, also den maximalen Klauenhub ausgeführt haben, dehnt sich die Ringfeder in den Sperrraum 50 zwischen der Sägezahnrampe 39 an der Rasthülse 27 und den Rand des Bodens der Ringvertiefung 51 aus. Damit können die Sägezahnrampen 38, 39, selbst wenn sie sich um eine Schrittweite gegeneinander verdreht haben, nicht in einer neuen Raststufe in Eingriff gelangen. Vielmehr werden die Sägezahnrampen 38, 39 beim Lösen der Bremse zunächst wieder ihre alte Winkellage einnehmen und dort später erneut in Eingriff gelangen, wenn sich die Spiralfeder 53 abgekühlt und wieder zusammengezogen hat.

Da aber nicht jede Bremsung mit einer erhöhten Wärmeentwicklung einhergeht, wird es bei einer der folgenden Bremsungen nicht zu einer Behinderung der Nachstellung kommen, so dass der bis dahin aufgelaufene Belagverschleiß ausgeglichen werden kann.

Anstelle einer Spiralfeder kann auch ein sternförmiges Element gemäß den Fig. 4a, b zum Einsatz kommen, dasein Zentrum 55besitzt von dem z. B. vier Bimetall aufweisende Arme 56 ausgehen. Im kalten Zustand sind die Arme 56 verkürzt (Fig. 4a), im erwärmten Zustand werden sie gestreckt (Fig. 4b), so dass sich ihre distalen Enden in den Sperrraum 50 so zwischen die Rasthülse 27 und den Nachstellkolben legen, dass die Sägezahnrampen 38, 39 keine verdrehte Rastposition einnehmen können.

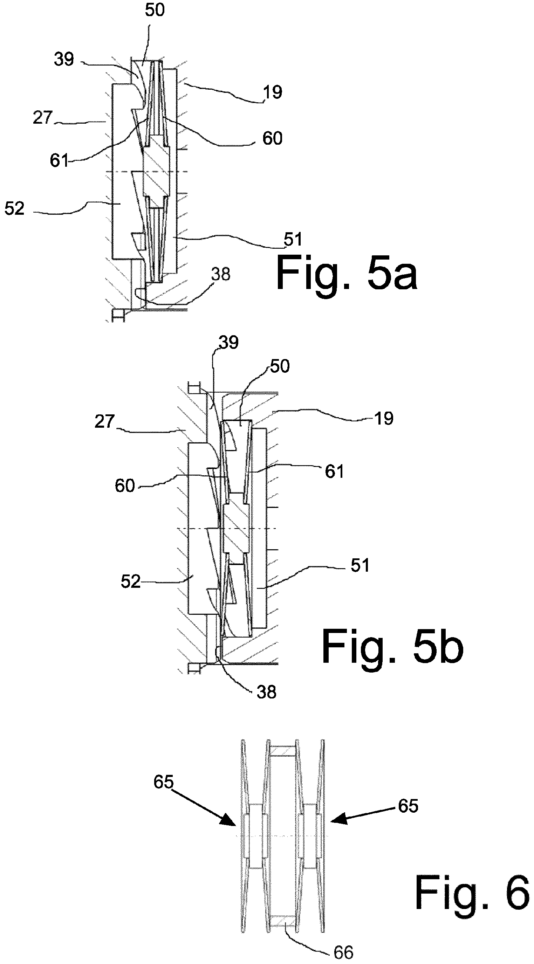

Fig. 5a zeigt eine Ausführung des Bimetallelementes in Form von zwei koaxial angeordneten, aus einem Bimetall bestehenden Tellerfedern 60, 61, die so koaxial angeordnet sind, dass ihre einander zugewandten Flächen im kalten Zustand konkav sind. Ihre Ränder in dem Sperrraum 50 liegen somit eng beieinander und können die Breite des Sperrraumes 50 nicht ausfüllen. Wenn sich die Bremse erwärmt (Fig. 5 b), klappen die Tellerfedern um, so dass ihre konkaven Seiten jetzt außen liegen und ihre Ränder beabstandet sind. Dadurch füllen sie die Breite des Sperrraumes 50 aus, so dass die Sägezahnrampen 38,39 keine verdrehte Rastposition einnehmen können, wodurch eine Nachstellung verhindert wird.

Um auch bei kleinen Klappwinkeln der Tellerfedern 60, 61 eine ausreichend große Differenz zwischen der Randbreite im kalten und im erwärmten Zustand zu erreichen, können - wie dies in Fig. 6 gezeigt ist - zwei (oder auch mehr) Tellerfedernpaare 65 hintereinander gesetzt werden, wobei sich zwischen ihnen jeweils ein Abstandsring 66 befindet.

### Bezugszeichenliste

- 1: Trommelbremse
- 2: Spreizeinheit
- 3: Rot-Trans-Wandler-Vorrichtung, insbesondere Kugel-Rampen-Vorrichtung
- 4: Bremsschuh
- 5: Bremsbelag
- 6: Bremstrommel
- 7: Innenwand
- 8: Antriebseinheit
- 9: Antriebshülse
- 10: Außenverzahnung

- 12: Ende
- 13: Ende
- 14: Gehäuse
- 15: Rolllager (Nadellager)
- 16: Sicherungselement
- 17: Betätigungskolben
- 18: Betätigungskolben
- 19: Nachstellkolben
- 20: Gewindebohrung
- 21: Gewindeabschnitt
- 22: Spreizkolben
- 23: Spreizkolben

- 26: Nachstelleinrichtung
- 27: Rasthülse
- 28: Schaft
- 29: Querstift
- 30: Druckfeder
- 31: Bremsschuhaufnahme
- 32: Vertiefung
- 33: Vertiefung
- 34: Kugel
- 35: Außenhülse
- 36: Querschlitz
- 37: Federelement
- 38: Sägezahnrampe
- 39: Sägezahnrampe

- 42: Kragen
- 43: Gleitscheibe

- 50: Sperrraum
- 51: Ringvertiefung
- 52: Kreisvertiefung
- 53: Spiralfeder

- 55: Zentrum
- 56: Arme

- 60: Tellerfeder
- 61: Tellerfeder
- 65: Tellerfedernpaare
- 66: Abstandsring

- A: Achse

## Patentansprüche

1. Spreizeinheit (2) für eine Trommelbremse (1), umfassend ein Gehäuse (14) und zwei in Bezug auf das Gehäuse (14) verdrehgesichert angeordnete erste und zweite Bremsschuhaufnahmen (31, 31'), welche linear entlang einer Achse (A) voneinander weg jeweils in eine Spreizrichtung (S, S') sowie zueinander jeweils in eine Löserichtung (L, L') betätigbar sind und auf jeweils einen ersten und einen zweiten, mit jeweils einem Bremsbelag (5, 5') versehenen Bremsschuh (4, 4') einwirken, mit einer oder mehreren Rot-Trans-Wandler-Vorrichtungen, und wobei eine Nachstelleinrichtung (26) zum Ausgleich eines durch einen Verschleiß der Bremsbeläge (5, 5') sich erhöhenden Betätigungsweg zwischen den Betätigungskolben angeordnet ist, die so eingerichtet ist, dass sie den Abstand der Betätigungskolben in wenigstens einen Nachstellschritt ändert, wenn der Betätigungsweg einen Sollwert überschritten hat, **dadurch gekennzeichnet, dass** eine thermisch aktivierbare Sperreinrichtung vorgesehen ist, die so eingerichtet ist, dass bei einer Temperatur über einen Sollwert die Ausführung des Nachstellschrittes durch die Nachstelleinrichtung mechanisch verhindert ist.

2. Spreizeinheit nach Anspruch 1, **dadurch gekennzeichnet, dass** die Nachstelleinrichtung (26) eine aus zwei Klauen bestehende Freilaufkupplung aufweist, wobei die Klauen im Freilauf einen relativen Hub ausführen und wobei die eine Klaue drehgesichert mit der ersten Bremsschuhaufnahme (31) und die andere Klaue über eine Gewindespindel mit dem zweiten Betätigungskolben (18) verbunden ist, und dass die Sperreinrichtung wirkmäßig parallel zur Klauenkupplung angeordnet ist und daher im aktivierten Zustand die Klauen getrennt hält.

3. Spreizeinheit nach Anspruch 1, **dadurch gekennzeichnet, dass** die Klauen auf jeweils einer ihrer Stirnseiten auf einem Kreis verlaufende und ineinandergreifende Sägezahnrampen (38, 39) besitzen, wobei die Länge einer Rampe auf dem Kreisbogen die vorgegebene Schrittweite und die Höhe der Rampe einen maximalen Klauenhub definiert.

4. Spreizeinheit nach Anspruch 2 oder 3, **dadurch gekennzeichnet, dass** die Sperreinrichtung ein Bimetallelement aufweist und dass zwischen den Klauen ein Sperrraum (50) liegt, der seitlich von den Klauen begrenzt ist, wobei das Bimetallelement so angeordnet ist, dass es sich jedenfalls dann in den Sperrraum hinein oder im Sperrraum auszudehnen vermag, wenn der maximale Klauenhub erreicht worden ist.

5. Spreizeinheit nach Anspruch 4, **dadurch gekennzeichnet, dass** das Bimetallelement eine Spiralfeder (53) aufweist deren Durchmesser sich temperaturbedingt ändert und die so angeordnet ist, das ihr äußerer Rand bei einer temperaturbedingten Ausdehnung in den Sperrraum (50) gelangt.

6. Spreizeinheit nach Anspruch 4, **dadurch gekennzeichnet, dass** das Bimetallelement wenigstens einen von einem Zentrum ausgehenden Arm aufweist der sich temperaturbedingt verlängert und der so angeordnet ist, dass sein distales Ende bei einer temperaturbedingten Verlängerung des Armes in den Sperrraum (50) gelangt.

7. Spreizeinheit nach Anspruch 6, **dadurch gekennzeichnet, dass** das Bimetallelement mehrere Arme aufweist, die vorzugsweise sternförmig angeordnet sind.

8. Spreizeinheit nach Anspruch 4, **dadurch gekennzeichnet, dass** das Bimetallelement zwei gegensinnig angeordnete Tellerfedern (60, 61) aufweist, deren jeweils eine Seitenfläche temperaturbedingt eine konvexe oder konkave Form annimmt und deren äußere Ränder sich in dem Sperrraum (50) befinden.

9. Spreizeinheit nach Anspruch 8, **dadurch gekennzeichnet, dass** wenigstens zwei Tellerpaare vorgesehen sind.

10. Spreizeinheit nach Anspruch 9, **dadurch gekennzeichnet, dass** sich zwischen den Tellerpaaren ein Abstandsring befindet.

11. Spreizeinheit nach einem der vorhergehenden Ansprüche 2 bis 9, **dadurch gekennzeichnet, dass** die mit der ersten Bremsschuhaufnahme verbundene Klaue als Rasthülse (27) ausgebildet ist, die fest mit der ersten Bremsschuhaufnahme (31) verbunden ist und dass die mit dem zweiten Betätigungskolben gekoppelte Klaue als Nachstellkolben ausgebildet ist, wobei die Rasthülse (27) gegenüber der zweiten Bremsschuhaufnahme (31') verdrehgesichert, gegenüber dem zweiten Betätigungskolben (18) axial begrenzt verschiebbar sowie gegen den Nachstellkolben (19) elastisch vorgespannt angeordnet ist.

12. Spreizeinheit nach einem oder mehreren der vorhergehenden Ansprüche 1-11, **dadurch gekennzeichnet, dass** zumindest eine Rot-Trans-Wandler-Vorrichtung zwecks Linearbewegung einer Bremsschuhaufnahme (31,31') ausgebildet ist, mittels
a) einer Kugel-Rampen-Vorrichtungen (3, 3'), wobei eine erste Kugel-Rampen-Vorrichtung (3) einen ersten um eine Achse (A) drehbar angeordneten Betätigungskolben (17) und optional mit einer zweiten Kugel-Rampen-Vorrichtung (3') die einen zweiten, um eine Achse (A) drehbar angeordneten Betätigungskolben (18) aufweist, und /oder aufweisend
b) wenigstens eine oder mehrere Mutter-Spindel-Getriebe wie insbesondere ein Mutter-Spindel-Getriebe mit eingefügten Wälzkörpern, nämlich insbesondere mit Kugeln, und oder
c) beliebige Mischkonstellation mit Merkmalen der Varianten a) und/ oder b).

13. Spreizeinheit nach einem oder mehreren der vorhergehenden Ansprüche 1-12, **dadurch gekennzeichnet, dass** diese mit Hilfe eines elektromechanischen Aktuators umfassend einen Elektromotor elektromechanisch antreibbar ausgebildet ist.

14. Spreizeinheit nach einem oder mehreren der vorhergehenden Ansprüche 1-13, **dadurch gekennzeichnet, dass** diese mittelbar oder unmittelbar mit einer elektrischen Lastmesseinrichtung ausgestattet ist, wie insbesondere mit der Lastmesseinrichtung zwecks elektrisch gesteuerter und/oder geregelter Zuspannung der Trommelbremse kooperiert.

## Claims

1. Spreader unit (2) for a drum brake (1), comprising a housing (14) and two, first and second brake shoe holders (31, 31') that are arranged in a manner secured against rotation in relation to the housing (14), are able to be actuated linearly along an axis (A), respectively away from one another in a spreading direction (S, S') and respectively toward one another in a release direction (L, L'), and each act on a first and a second brake shoe (4, 4') provided respectively with a brake lining (5, 5'), having one or more rotation-translation converter apparatuses, and wherein a readjustment device (26) for compensating for an actuating travel that increases as a result of wear on the brake linings (5, 5') is arranged between the actuating pistons, said readjustment device (26) being designed such that it changes the spacing of the actuating pistons in at least one readjustment step when the actuating travel has exceeded a setpoint value, **characterized in that** a thermally activatable blocking device is provided, which is designed such that, at a temperature above a setpoint value, the execution of the readjustment step by the readjustment device is mechanically prevented.

2. Spreader unit according to Claim 1, **characterized in that** the readjustment device (26) has a freewheel clutch consisting of two claws, wherein, during freewheeling, the claws carry out a relative stroke and wherein one claw is connected to the first brake shoe holder (31) in a manner secured against rotation and the other claw is connected to the second actuating piston (18) via a threaded spindle, and **in that** the blocking device is arranged operatively parallel to the claw clutch and therefore keeps the claws apart in the activated state.

3. Spreader unit according to Claim 1, **characterized in that** the claws have, on a respective one of their end faces, sawtooth ramps (38, 39) that extend in a circle and engage in one another, wherein the length of a ramp on the circular arc defines the predetermined step width and the height of the ramp defines a maximum claw stroke.

4. Spreader unit according to Claim 2 or 3, **characterized in that** the blocking device has a bimetallic element, and **in that** there is a blocking space (50) between the claws, said blocking space (50) being laterally delimited by the claws, wherein the bimetallic element is arranged such that it is capable of expanding into the blocking space or in the blocking space at least when the maximum claw stroke has been reached.

5. Spreader unit according to Claim 4, **characterized in that** the bimetallic element has a spiral spring (53), the diameter of which changes depending on temperature and which is arranged such that its outer edge passes into the blocking space (50) upon temperature-dependent expansion.

6. Spreader unit according to Claim 4, **characterized in that** the bimetallic element has at least one arm extending from a center, which lengthens depending on temperature and which is arranged such that its distal end passes into the blocking space (50) upon temperature-dependent lengthening of the arm.

7. Spreader unit according to Claim 6, **characterized in that** the bimetallic element has a plurality of arms, which are preferably arranged in a star shape.

8. Spreader unit according to Claim 4, **characterized in that** the bimetallic element has two disk springs (60, 61) which are arranged in opposite directions, one respective side face of which assumes a convex or concave shape depending on temperature and the outer edges of which are located in the blocking space (50).

9. Spreader unit according to Claim 8, **characterized in that** at least two pairs of disks are provided.

10. Spreader unit according to Claim 9, **characterized in that** a spacer ring is located between the pairs of disks.

11. Spreader unit according to one of the preceding Claims 2 to 9, **characterized in that** the claw connected to the first brake shoe holder is in the form of a latching sleeve (27) which is firmly connected to the first brake shoe holder (31), and **in that** the claw coupled to the second actuating piston is in the form of a readjustment piston, wherein the latching sleeve (27) is secured against rotation with respect to the second brake shoe holder (31'), is axially movable to a limited extent with respect to the second actuating piston (18), and is arranged in a manner elastically preloaded against the readjustment piston (19).

12. Spreader unit according to one or more of the preceding Claims 1-11, **characterized in that** at least one rotation-translation converter apparatus is configured for the purpose of linear movement of a brake shoe holder (31, 31') by means of
a) ball-ramp apparatuses (3, 3'), wherein a first ball-ramp apparatus (3) has a first actuating piston (17) that is arranged so as to be rotatable about an axis (A) and optionally a second ball-ramp apparatus (3') has a second actuating piston (18) that is arranged so as to be rotatable about an axis (A), and/or having
b) at least one or more nut-spindle transmissions, for instance in particular a nut-spindle transmission having inserted rolling bodies, in particular having balls, and/or
c) any mixed configuration having features of variants a) and/or b).

13. Spreader unit according to one or more of the preceding Claims 1-12, **characterized in that** it is configured to be electromechanically drivable with the aid of an electromechanical actuator comprising an electric motor.

14. Spreader unit according to one or more of the preceding Claims 1-13, **characterized in that** it is equipped indirectly or directly with an electric load measurement device, for instance in particular cooperates with the load measurement device for the purpose of applying the drum brake under electrical open-loop and/or closed-loop control.

## Revendications

1. Unité d'écartement (2) pour un frein à tambour (1), comprenant un boîtier (14) et deux premier et deuxième logements de segment de frein (31, 31 '), agencés de manière immobilisée en rotation par rapport au boîtier (14), qui peuvent être actionnés linéairement le long d'un axe (A) à l'écart l'un de l'autre respectivement dans une direction d'écartement (S, S') ainsi que l'un vers l'autre respectivement dans une direction de relâchement (L, L') et agissent respectivement sur un premier et un deuxième segment de frein (4, 4') pourvus respectivement d'une garniture de frein (5, 5'), avec un ou plusieurs dispositifs convertisseurs rot-trans, et un appareil d'ajustement (26) étant agencé entre les pistons d'actionnement pour compenser une course d'actionnement augmentée par une usure des garnitures de frein (5, 5'), lequel est adapté pour modifier la distance des pistons d'actionnement dans au moins une étape d'ajustement lorsque la course d'actionnement a dépassé une valeur de consigne, **caractérisée en ce qu'**un appareil de blocage thermiquement activable est prévu, qui est adapté de telle sorte qu'à une température supérieure à une valeur de consigne, l'exécution de l'étape d'ajustement par l'appareil d'ajustement est mécaniquement empêchée.

2. Unité d'écartement selon la revendication 1, **caractérisée en ce que** l'appareil d'ajustement (26) présente un accouplement à roue libre constitué de deux griffes, les griffes effectuant une course relative en roue libre et l'une des griffes étant reliée de manière immobilisée en rotation au premier logement de segment de frein (31) et l'autre griffe étant reliée par l'intermédiaire d'une broche filetée au deuxième piston d'actionnement (18), et **en ce que** l'appareil de blocage est agencé de manière effective parallèlement à l'accouplement à griffes et maintient ainsi les griffes séparées à l'état activé.

3. Unité d'écartement selon la revendication 1, **caractérisée en ce que** les griffes possèdent respectivement, sur l'un de leurs côtés frontaux, des rampes en dents de scie (38, 39) s'étendant sur un cercle et s'engageant l'une dans l'autre, la longueur d'une rampe sur l'arc de cercle définissant la largeur de pas prédéfinie et la hauteur de la rampe définissant une course maximale des griffes.

4. Unité d'écartement selon la revendication 2 ou 3, **caractérisée en ce que** l'appareil de blocage présente un élément bimétallique et **en ce qu'**entre les griffes se trouve un espace de blocage (50) qui est délimité latéralement par les griffes, l'élément bimétallique étant agencé de manière à pouvoir s'étendre en tout cas à l'intérieur de l'espace de blocage ou dans l'espace de blocage lorsque la course maximale des griffes a été atteinte.

5. Unité d'écartement selon la revendication 4, **caractérisée en ce que** l'élément bimétallique présente un ressort spiral (53) dont le diamètre varie sous l'effet de la température et qui est agencé de telle sorte que son bord extérieur pénètre dans l'espace de blocage (50) lors d'une expansion sous l'effet de la température.

6. Unité d'écartement selon la revendication 4, **caractérisée en ce que** l'élément bimétallique présente au moins un bras partant d'un centre, qui s'allonge sous l'effet de la température et qui est agencé de telle sorte que son extrémité distale pénètre dans l'espace de blocage (50) lors d'un allongement du bras sous l'effet de la température.

7. Unité d'écartement selon la revendication 6, **caractérisée en ce que** l'élément bimétallique présente plusieurs bras, qui sont de préférence agencés en étoile.

8. Unité d'écartement selon la revendication 4, **caractérisée en ce que** l'élément bimétallique présente deux rondelles ressorts (60, 61) agencées en sens inverse, dont une surface latérale prend une forme convexe ou concave sous l'effet de la température et dont les bords extérieurs se trouvent dans l'espace de blocage (50).

9. Unité d'écartement selon la revendication 8, **caractérisée en ce qu'**au moins deux paires de rondelles sont prévues.

10. Unité d'écartement selon la revendication 9, **caractérisée en ce qu'**une bague d'espacement se trouve entre les paires de rondelles.

11. Unité d'écartement selon l'une quelconque des revendications 2 à 9 précédentes, **caractérisée en ce que** la griffe reliée au premier logement de segment de frein est configurée sous forme de douille d'encliquetage (27) qui est reliée de manière fixe au premier logement de segment de frein (31) et **en ce que** la griffe couplée au deuxième piston d'actionnement est configurée sous forme de piston d'ajustement, la douille d'encliquetage (27) étant agencée de manière immobilisée en rotation par rapport au deuxième logement de segment de frein (31'), de manière à pouvoir coulisser axialement de manière limitée par rapport au deuxième piston d'actionnement (18) ainsi que de manière précontrainte élastiquement contre le piston d'ajustement (19).

12. Unité d'écartement selon une ou plusieurs des revendications 1 à 11 précédentes, **caractérisée en ce qu'**au moins un dispositif convertisseur rot-trans est configuré pour le mouvement linéaire d'un logement de segment de frein (31, 31') au moyen
a) d'un dispositif à billes et rampes (3, 3'), un premier dispositif à billes et rampes (3) présentant un premier piston d'actionnement (17) agencé de manière rotative autour d'un axe (A) et, facultativement, avec un deuxième dispositif à billes et rampes (3') qui présente un deuxième piston d'actionnement (17) agencé de manière rotative autour d'un axe (A), et/ou présentant
b) au moins un ou plusieurs engrenages à vis et écrou, tel que notamment un engrenage à vis et écrou à corps de roulement encastrés, à savoir notamment avec des billes, et ou
c) une configuration mixte quelconque avec des caractéristiques des variantes a) et/ou b).

13. Unité d'écartement selon une ou plusieurs des revendications 1 à 12 précédentes, **caractérisée en ce que** celle-ci est configurée pour pouvoir être entraînée électromécaniquement à l'aide d'un actionneur électromécanique comprenant un moteur électrique.

14. Unité d'écartement selon une ou plusieurs des revendications 1 à 13 précédentes, **caractérisée en ce que** celle-ci est équipée directement ou indirectement d'un appareil électrique de mesure de la charge, tel que notamment coopère avec l'appareil de mesure de la charge en vue d'un serrage électriquement commandé et/ou régulé du frein à tambour.
